# EUROPÄISCHE PATENTSCHRIFT

(11) **EP 1 033 103 B1**
(45) Veröffentlichungstag und Bekanntmachung des Hinweises auf die Patenterteilung: **10.09.2003**
(21) Anmeldenummer: 00102680.6
(22) Anmeldetag: 09.02.2000
(51) Int. Cl.: A47L 9/24

(54) **Teleskopierbares Staubsauger-Saugrohr**
Telescopic vacuum cleaner suction hose
Tuyau d'aspirateur télescopique

(30) Priorität: 22.02.1999 DE 19907308; 03.02.2000 DE 10004443
(43) Veröffentlichungstag der Anmeldung: 06.09.2000
(73) Patentinhaber: Froh House Tech GmbH & Co. KG, 59846 Sundern (DE)
(72) Erfinder: Kittelmann, Gotthard, 59889 Eslohe (DE); Günther, Olaf, 59846 Sundern (DE)
(74) Vertreter: Patentanwälte Ostriga & Sonnet

(56) Entgegenhaltungen:
- EP-A- 0 520 534
- EP-A- 0 553 482
- WO-A-98/56289

## Beschreibung

Die Erfindung betrifft ein teleskopierbares Staubsauger-Saugrohr entsprechend dem Oberbegriff des Anspruchs 1. Ein solches teleskopierbares Staubsauger-Saugrohr ist Gegenstand der US 33 51 363. Die US 33 51 363 zeigt drei unterschiedliche Ausführungsformen eines teleskopierbaren Staubsauger-Saugrohres.

Entsprechend der ersten Ausführungsform (Fig. 1-8) der US 33 51 363 ist eine Kunststoff-Führungshülse außen auf dem Außenrohr befestigt und umspannt mit einem zylindrischen Ansatz das Innenrohr. Dieser Ansatz bildet eine Sperrkörper-Aussparung für einen Sperrkörper in Form einer Kugel. Auf der Führungshülse ist eine Betätigungshülse geführt, welche sich entgegen zwei antagonistisch wirkende Druckfedern in beiden Axialrichtungen verschieben läßt. In einer neutralen balancierten Federlage beaufschlagt die Sperrfläche der Betätigungshülse den Sperrkörper in seiner Sperrstellung. Axial beiderseits der Sperrfläche bildet die Betätigungshülse je einen Ausweichraum, so dass, ausgehend von der neutralen Federlage, der Sperrkörper in beiden axialen Verschieberichtungen der Betätigungshülse jeweils in seine Lösestellung versetzt werden kann.

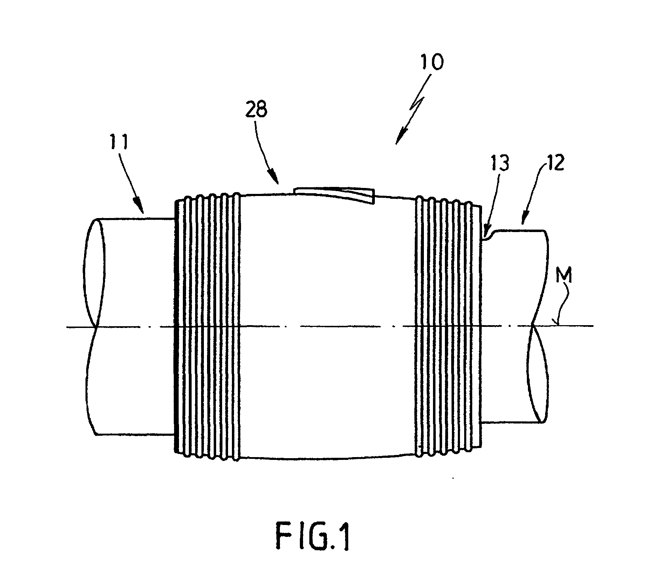

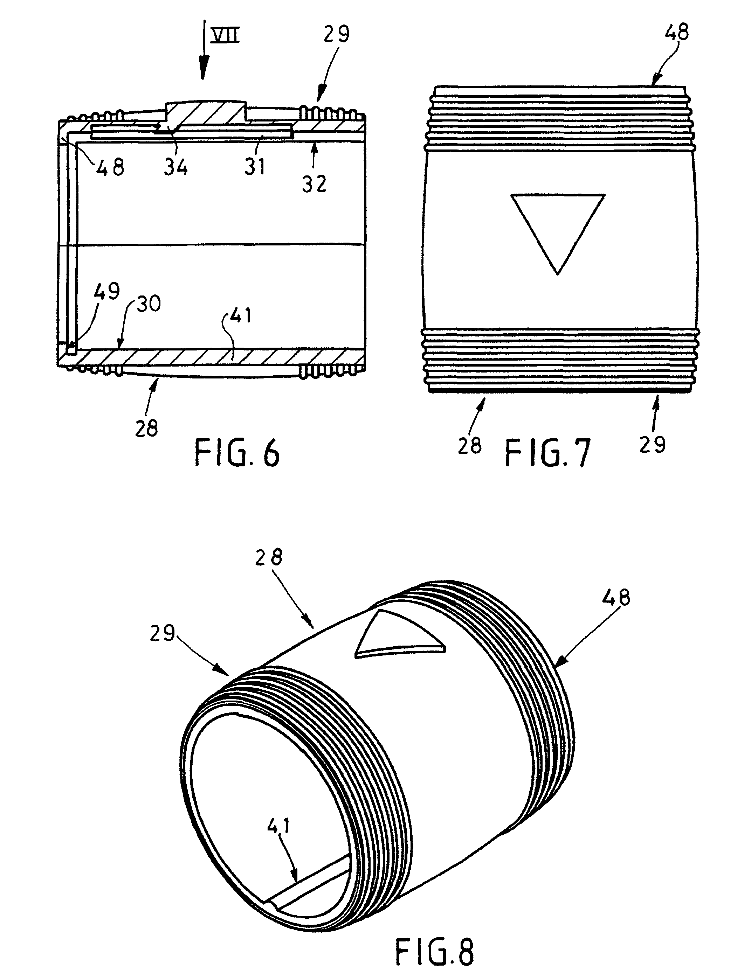

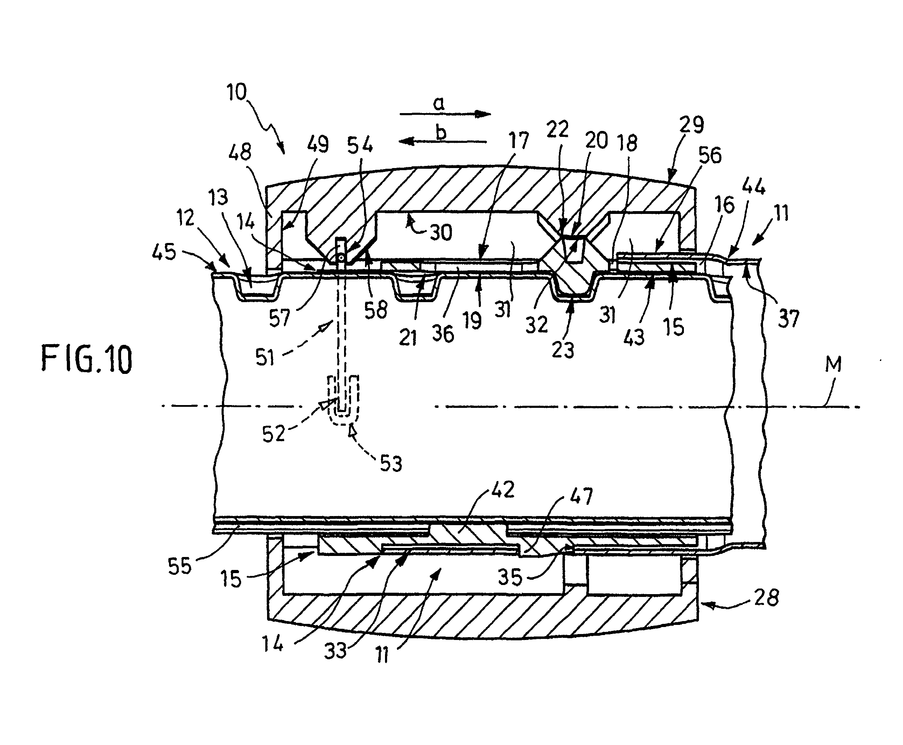

Neben der erstgenannten Ausführungsform (Fig. 1-8) gemäß der US 33 51 363 ist auch die zweite Ausführungsform eine Ausgangsbasis für die erfindungsgemäße Weiterentwicklung. Die zweite Ausführungsform gemäß den Fig. 9-12 weist wiederum eine Führungshülse auf, die an der Außenmantelfläche des Aussenrohres befestigt ist und die das Innenrohr mit einem eine Sperrkörper-Aussparung für den Sperrkörper (Kugel) bildenden zylindrischen Ansatz übergreift.

Die zweite Ausführungsform der US 33 51 363 gemäß den Fig. 9-12 unterscheidet sich von der ersten Ausführungsform gemäß den Fig. 1-8 im wesentlichen nur dadurch, dass die Betätigungshülse nur in einer Axialrichtung entgegen Federrückstellkraft verschiebbar ist und im übrigen nur eine Sperrfläche und nur einen Ausweichraum für den kugeligen Sperrkörper aufweist.

Die dritte Ausführungsform gemäß der US 33 51 363 ist in den Fig. 13-15 gezeigt. Bei dieser Ausführungsform ist die Führungshülse in einer Aufweitung innerhalb des Außenrohres befestigt. Die das Außenrohr umgebende Betätigungshülse ist drehbeweglich ausgebildet, so dass der Lösehub wegen des sich in Umfangsrichtung unmittelbar an eine Sperrfläche anschliessenden Ausweichraums (jeweils gebildet von der Betätigungshülse) durch Drehung herbeigeführt werden kann. Als nachgiebiger Niederhalter für den kugeligen Sperrkörper dient in deren Lösestellung eine innen an der Betätigungshülse einseitig angenietete stählerne Blattfeder.

Die dritte Ausführungsform gemäß den Fig. 13-15 der US 33 51 363 bildet keine gattungsmäßige Ausgangsbasis für die vorliegende Erfindung, zumal bei der bekannten Ausführungsform mit drehbarer Betätigungshülse keine Federrückstellkraft vorgesehen ist, welche die Betätigungshülse in ihrer Sperrlage hält.

Ansonsten ist die im folgenden noch näher zu beschreibende Erfindung sehr wohl auf drehbare Betätigungshülsen anwendbar, zumal entsprechend dem Oberbegriff des Anspruchs 1 eine Sperrfläche vorgesehen ist, an welche sich mindestens ein vom Betätigungskörper gebildeter Ausweichraum anschließt. Also umfaßt die Erfindung auch z.B. zwei beiderseits einer Sperrfläche angeordnete Ausweichräume.

Ausgehend von dem teleskopierbaren Staubsauger-Saugrohr gemäß der US 33 51 363, liegt der Erfindung die Aufgabe zugrunde, ein teleskopierbares Staubsauger-Saugrohr mit einem verhältnismäßig geringen Herstellungs- und Montageaufwand zu schaffen.

Zusammen mit dem Merkmalen des Oberbegriffs des Anspruchs 1 wird diese Aufgabe entsprechend den Kennzeichnungsmerkmalen des Anspruchs 1 dadurch gelöst, dass die Führungshülse mit mindestens einem Teil ihrer Axiallänge im Innenraum des Außenrohres aufgenommen ist, dass die die Wand der Führungshülse durchsetzende Sperrkörper-Aussparung eine Zunge aufnimmt, deren inneres Zungenende an einem Ende der Sperrkörper-Aussparung an der Führungshülse gehalten ist, dass das freie Zungenende an seiner dem Innenrohr zugewandten Seite den Sperrkörper bildet, und dass Sperrfläche und Ausweichraum des Betätigungskörpers alternativ mit der dem Innenrohr abgewandten Seite des freien Zungenendes ausrichtbar sind.

Eine Ausgestaltung der Erfindung besteht darin, dass die Zunge über ihr inneres Zungenende stoffschlüssig mit der Führungshülse verbunden ist.

Eine andere erfindungsgemäße Weiterentwicklung besteht darin, dass Führungshülse und Zunge eine einheitliches Kunststoffspritzgußteil bilden.

Während gemäß der US 33 51 363 die Rastkugel während der Montage leicht verlorengehen kann, und deshalb zweckmäßig zunächst in einer Vormontagestellung zu sichern ist, behebt die Erfindung diesen Nachteil dadurch, dass sie an einem Ende der Sperrkörper-Aussparung das innere Zungenende einer Zunge hält bzw. festhält, insbesondere unverlierbar hält.

Dabei bildet das freie Zungenende an seiner dem Innenrohr zugewandten Seite zugleich den Sperrkörper. Zweckmäßig ist der Sperrkörper dem freien Zungenende stoffschlüssig angeformt.

Die Anlenkung des freien Zungenendes an die Führungshülse geschieht beispielsweise, wie bereits erwähnt, stoffschlüssig, wie z.B. gelenkig (mittels eines Filmscharniers beispielsweise) oder nach Art einer einseitig eingespannten Biegefeder.

Die Montage der Führungshülse geschieht in einfacher Weise durch Steckmontage, indem zumindest ein Axialbereich der Führungshülse in das zweckmäßig aufweitungslose Außenrohr eingesteckt und dort (z.B. mittels Verrastung) befestigt wird. Sodann wird das mit den Rastausnehmungen versehene Innenrohr in die Führungshülse eingeschoben und schließlich, zweckmäßig axial über das Innenrohr hinweg, der Betätigungskörper an der Führungshülse oder an dem Außenrohr befestigt.

Die erfindungsgemäße Sperrvorrichtung besteht nur aus drei Bauteilen, nämlich aus der Führungshülse, der Betätigungshülse und einer Feder, wodurch die Montage sehr einfach ist.

Eine erfindungsgemäße Ausführungsform, welche keinen axialen Überstand wie bei der US 33 51 363 (s. dort z.B. Fig. 5 Pos. 34) benötigt und deshalb eine besonders für Handstaubsauger geeignete axial kurze Bauform gestattet, ist erfindungsgemäß dadurch gekennzeichnet, dass die Führungshülse im wesentlichen gänzlich im Innenraum des Außenrohres aufgenommen ist, und dass das Außenrohr eine dessen Wand durchsetzende Durchgriffsaussparung aufweist, welche einerseits mit der Sperrkörper-Aussparung der Führungshülse und andererseits mit der Sperrfläche und dem Ausweichraum des Betätigungskörpers ausgerichtet ist.

Eine andere erfindungsgemäße Ausführungsform, welche eine Entriegelungsbetätigung des Betätigungskörpers bzw. der Betätigungshülse in zwei einander entgegengesetzten Betätigungsrichtungen gestattet, ist dadurch gekennzeichnet, dass der Betätigungskörper in zwei unterschiedlichen Richtungen gegen jeweils eine entgegen einer Richtung wirkende Federrückstellkraft bewegbar, insbesondere verschiebbar, ist, wobei die Sperrfläche des Betätigungskörpers in neutraler Federlage mit der dem Innenrohr abgewandten Seite des freien Zungenendes ausgerichtet ist, und wobei sich der Ausweichraum des Betätigungskörpers in den unterschiedlichen Richtungen an beiden Seiten der Sperrfläche erstreckt.

Eine vorteilhafte erfindungsgemäße Ausgestaltung besteht darin, dass die in entgegengesetzten Axialrichtungen wirkenden Federrückstellkräfte von einer sich quer zu den beiden Axialrichtungen erstreckenden, an der Führungshülse gehaltenen Stabfeder bereitgestellt werden, deren Biegebereich mit dem Betätigungskörper bewegungsgekuppelt ist. Eine Entriegelungsbetätigung in zwei einander entgegengesetzten Betätigungsrichtungen, ausgehend von einer neutralen Federlage, ist im Zusammenhang mit einer teilkreisförmigen Stabfeder durch die EP 0 552 481 B1 an sich bekannt.

Weitere vorteilhafte Erfindungsmerkmale sind den Unteransprüchen zu entnehmen.

In den Zeichnungen sind bevorzugte Ausführungsbeispiele entsprechend der Erfindung dargestellt, es zeigt
Fig. 1 eine Teilansicht eines teleskopierbaren Staubsauger-Saugrohres,
Fig. 2 einen vergrößerten axialen Teilschnitt durch die Sperrvorrichtung des Staubsauger-Saugrohres gemäß Fig. 1, bezüglich Fig. 1 seitenverkehrt dargestellt,
Fig. 3 einen Axialschnitt durch eine Führungshülse,
Fig. 4 eine Draufsicht auf die Führungshülse entsprechend dem mit IV bezeichneten Ansichtspfeil in Fig. 3,
Fig. 5 eine räumliche Darstellung der Führungshülse,
Fig. 6 einen Längsschnitt durch eine Betätigungshülse,
Fig. 7 eine Draufsicht auf die Betätigungshülse gemäß dem mit VII bezeichneten Ansichtspfeil in Fig. 6,
Fig. 8 eine räumliche Darstellung der Betätigungshülse,
Fig. 9 eine isolierte Darstellung des mit einer Durchgriffsaussparung versehenen Endes des Außenrohres, etwa entsprechend dem in Fig. 2 mit IX bezeichneten Ansichtspfeil und
Fig. 10 in Anlehnung etwa an die Darstellung gemäß Fig. 2 eine abgewandelte Ausführungsform.

Soweit im folgenden voneinander abweichende Ausführungen gezeigt sind, sind einander analoge Merkmale trotz körperlicher Abweichungen stets mit denselben Bezugsziffern versehen.

In Fig. 1 ist ein axialer Teilbereich eines teleskopierbaren Staubsauger-Saugrohres, dessen Längsmittelachse mit M angegeben ist, mit der Bezugsziffer 10 bezeichnet. Das teleskopierbare Staubsauger-Saugrohr 10 weist ein Außenrohr 11 und ein axial teilweise vom Außenrohr 11 aufgenommenes, mit Rastvertiefungen 13 versehenes Innenrohr 12 auf. In Fig. 1 ist außerdem eine Kunststoff-Betätigungshülse 28 gezeigt.

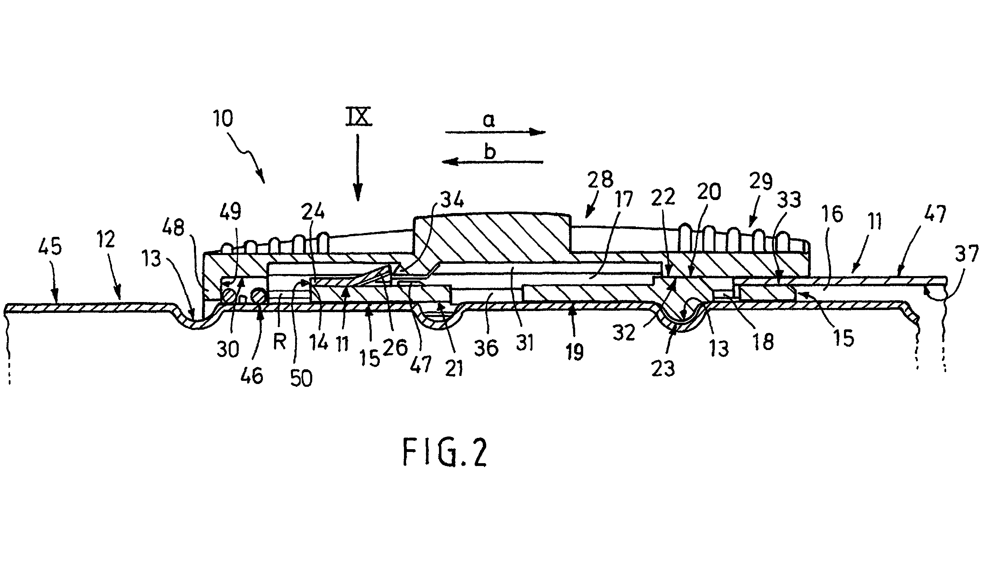

Der detaillierte Aufbau der Sperrvorrichtung des teleskopierbaren Staubsauger-Saugrohres gemäß Fig. 1 geht besonders deutlich aus Fig. 2 hervor. Von der äußeren Stirnfläche 14 des Außenrohres 11 her ist eine Kunststoff-Führungshülse 15 in den kreiszylindrischen Innenraum 16 des Außenrohres 11 in Axialrichtung a entlang der Längsmittelachse M eingeschoben.

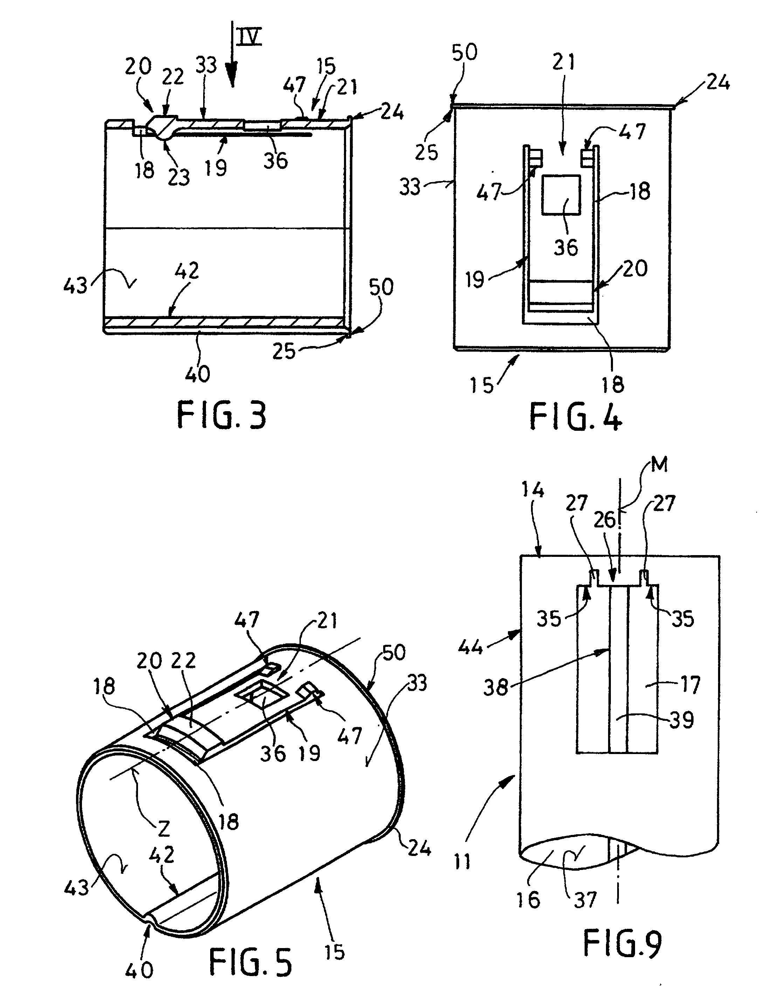

Das Außenrohr 11 weist eine im wesentlichen rechteckig konturierte Durchgriffsaussparung 17 auf, deren größere Länge sich parallel zur Längsmittelachse M erstreckt. Auch die Führungshülse 15 (vgl. Fig. 3-5) bildet eine im wesentlichen rechteckförmig konturierte Aussparung, die Sperrkörperaussparung 18, welche im wesentlichen mit der Durchgriffsaussparung 17 ausgerichtet ist.

In der Sperrkörperaussparung 18 ist eine Zunge 19 angeordnet, die ein freies Zungenende 20 und ein inneres Zungenende 21 aufweist, welches stoffschlüssig an die Führungshülse 15 angeformt ist. Die Anformung ist so beschaffen, dass die Zunge 19 aus mechanischer Sicht eine einseitig eingespannte Biegefeder darstellt. Das freie Zungenende 20 bildet an seiner Außenseite eine Anlagefläche 22. Diametral gegenüber der Anlagefläche 22 ist an der Innenseite des freien Zungenendes 20 ein etwa teilwalzenförmig erhabener Sperrkörper 23 angeformt, welcher, wie Fig. 2 zeigt, in eine Rastausnehmung 13 des Innenrohres 12 formschlüssig eingreift.

Die Führungshülse 15 weist außerdem einen radial nach außen abstehenden umlaufenden Außenflansch 24 auf, welcher mit seiner radialen Innenfläche 25 an der Stirnfläche 14 des Außenrohres 11 anliegt.

Im Bereich der Durchgriffsaussparung 17 des Außenrohres 11 ist eine schräg nach außen gerichtete Sperrzunge 26 zwischen zwei kurzen Axialschlitzen 27 freigeschnitten. Die Sperrzunge 26 dient dazu, die Betätigungshülse 28 unter Belassung ihrer begrenzten Axialverschieblichkeit auf dem Aussenrohr 11 axial zu sichern.

Zu ihrer Montage wird die Betätigungshülse 28 mit ihrem hinteren Ende 29 voran in Richtung a über das Außenrohr 11 so weit hinweggeschoben, bis eine an der Innenmantelfläche 30 der Betätigungshülse 28 nach innen vorspringende, etwa widerhakenförmige Rast 34 hinter der die Gegenrast bildenden Sperrzunge 26 des Außenrohres 11 praktisch unlösbar schnappverrastet ist.

Die Betätigungshülse 28 bildet an ihrer Innenmantelfläche 30 einen länglichen Ausweichraum 31 und eine Sperrfläche 32.

Auch die Führungshülse 15 ist schnappverrastend im Innenraum 16 des Außenrohres 11 gehalten. Hierzu bildet die Führungshülse 15 an ihrer Außenmantelfläche 33 am inneren Zungenende 21 zwei Rasten 47, welche mit von Sperrflächen der Durchgriffsaussparung 17 des Außenrohres 11 gebildeten Gegenrasten 35 schnappverrastend zusammenwirken.

Die Zungenlängsachse Z erstreckt sich parallel der Längsmittelachse M des teleskopierbaren Staubsauger-Saugrohres 10. In der Nähe des inneren Zungenendes 21 (Zungenwurzel) weist die Zunge 19 ein Fenster 36 auf, um weichere Federeigenschaften im Bereich der stoffschlüssigen Anlenkung 21 der Zunge 19 an den Körper der Führungshülse 15 zu erzielen.

Die Außenmantelfläche 44 des Außenrohres 11 weist zur Axialführung der Betätigungshülse 28 eine eine Nut bildende Axialsicke 38 auf. In diese Nut greift eine Axialfeder 41 der Betätigungshülse 28 ein. Dieselbe Axialsicke 38 bildet an der Innenmantelfläche 37 des Außenrohres 11 eine Axialfeder 39, welche in eine Axialnut 40 an der Außenmantelfläche 33 der Führungshülse 15 eingreift.

Auch die Außenmantelfläche 45 des Innenrohres 12 weist eine in nur in Fig. 10 (s. dort Pos. 55) dargestellte, entlang einer Mantellinie des Innenrohres 12 als Nut ausgebildete axiale Führungssicke auf, in welche eine axiale Führungsfeder 42 der Führungshülse 15 eingreift. Die Führungsfeder 42 an der Innenmantelfläche 43 der Führungshülse 15 befindet sich diametral gegenüber der an der Außenmantelfläche 33 der Führungshülse 15 angeordneten Axialnut 40.

Die in den Fig. 1-9 nicht dargestellte axiale Führungssicke des Innenrohres 12 sowie die axiale Führungsfeder 42 der Führungshülse 15 einerseits sowie die Axialnut 40 der Führungshülse 15, die Axialsicke 38 des Außenrohres 11 und die Axialfeder 41 der Betätigungshülse 28 andererseits sind, miteinander koinzidierend, jeweils auf demselben Radius angeordnet.

Zwischen der radialen Innenfläche 49 eines Innenflansches 48 der Betätigungshülse 28 und der radialen Flansch-Innenfläche 50 des Außenflansches 24 der Führungshülse 15 ist ein Aufnahmeraum R für eine Schraubendruckfeder 46 gebildet, welche das Innenrohr 12 mit mehreren Windungen umgibt. Der besseren Übersicht halber sind nicht alle Windungen der Schraubendruckfeder 46 gezeigt.

Gemäß Fig. 2 ist die Vorrichtung in ihrer gesperrten Lage gezeigt. Um den Sperrkörper 23 aus seiner Sperrlage zu lösen, wird die Betätigungshülse 28 entgegen der Rückstellkraft der Schraubendruckfeder 46 in Richtung a so weit verschoben, bis die Anlagefläche 22 der Zunge 19 außer Eingriff mit der Sperrfläche 32 der Betätigungshülse 28 gerät. Sodann ist es möglich, das Innenrohr 12 entweder in Richtung a oder in Richtung b axial zu verschieben, wobei der Sperrkörper 23 aus der Rastöffnung 13 hinausgedrängt wird.

Sobald eine Rastvertiefung 13 den Sperrkörper 23 unterfährt, federt die Zunge 19 mit ihrem Sperrkörper 23 in die betreffende Rastvertiefung 13 ein. Zugleich kann die Betätigungshülse 28 losgelassen werden und unter der Rückstellwirkung der Schraubendruckfeder 46 in die gemäß Fig. 2 gezeigte Sperrlage in Richtung b zurückgleiten.

In Fig. 10 ist eine Anordnung gezeigt, gemäß welcher der als Betätigungshülse 28 ausgebildete Betätigungskörper sowohl in Richtung a als auch in Richtung b zu betätigen ist, um eine Entriegelung des Sperrkörpers 23 zu bewirken.

Und zwar ist die Betätigungshülse 28 in den beiden unterschiedlichen Richtungen a und b gegen jeweils eine entgegen eine der beiden Richtungen a, b wirkende Federrückstellkraft verschiebbar, wobei die Sperrfläche 32 der Betätigungshülse 28 - wie in Fig. 10 dargestellt - in neutraler Federlage mit der dem Innenrohr 12 abgewandten Seite des freien Zungenendes 20 ausgerichtet, also die Sperrlage vorhanden ist. Dabei erstreckt sich der Ausweichraum 31 der Betätigungshülse 28 entsprechend den unterschiedlichen Richtungen a und b zu beiden Seiten der Sperrfläche 32. Sobald also eine Betätigungskraft versucht, die Betätigungshülse 28 in Richtung a oder b aus der neutralen Federlage (Sperrfläche 32 überlagert freies Zugende 20) zu verschieben, baut die Stabfeder 51 eine Gegenkraft (Federrückstellkraft) auf.

Die beiden Federrückstellkräfte wirken in den einander entgegengesetzten Axialrichtungen a, b, welche im wesentlichen parallel zur Längsmittelachse M des teleskopierbaren Staubsauger-Saugrohres verlaufen.

Die in den entgegengesetzten Axialrichtungen a, b wirkenden Federrückstellkräfte werden von einer sich quer zu den beiden Axialrichtungen a, b erstreckenden, an der Führungshülse 15 gehaltenen Stabfeder 51 bereitgestellt. Der Biegebereich 54 der Stabfeder 51 ist mit der Betätigungshülse 28 bewegungsgekuppelt. Dies geschieht derart, dass ein von der Innenmantelfläche 30 der Betätigungshülse 28 radial nach innen vorragender Mitnehmeransatz 58 den Biegebereich 54 der Stabfeder 51 mit einem Mitnehmerschlitz 57 übergreift.

Die Stabfeder 51 ist von einer mit der Führungshülse 15 koaxialen, letztere teilweise umschlingenden teilkreisförmigen Feder gebildet, deren beiden freien Federenden 52, von denen in Fig. 10 nur eines gestrichelt dargestellt ist, an der Außenmantelfläche 33 der Führungshülse 15 in Widerlagern 53 festgelegt sind. Von den Widerlagern 53 ist in Fig. 10 ebenfalls nur eines in Punktlinien dargestellt.

Aus Fig. 10 ist auch ersichtlich, dass als Schutz gegen Umdrehung eine Axialfeder 42 in eine axiale Führungssicke 55 des Innenrohres 12 eingreift.

Gemäß Fig. 10 ist der überwiegende Axialbereich der Führungshülse 15 in einer Aufweitung 56 des Außenrohrs 11 aufgenommen. Die Aufweitung 56 ist aber nicht obligatorisch. Das Außenrohr 11 kann zwecks Aufnahme der Führungshülse 15 auch aufweitungslos ausgebildet sein.

## Patentansprüche

1. Teleskopierbares Staubsauger-Saugrohr (10), mit einem Außenrohr (11) und einem zu letzterem axial verschieblichen, entlang einer Mantellinie Rastvertiefungen (13) aufweisenden Innenrohr (12), welches von einer am Außenrohr (11) befestigten Führungshülse (15) umgriffen ist, die eine Sperrkörper-Aussparung (18) zur Aufnahme eines mit den Rastvertiefungen (13) zusammenwirkenden Sperrkörpers (23) bildet, welcher von einem mindestens mittelbar an der Führungshülse (15) oder am Außenrohr (11) relativ beweglich gehaltenen Betätigungskörper (28) überlagert ist, der eine den Sperrkörper (23) übergreifende und letzteren in einer Rastausnehmung (13) haltende Sperrfläche (32) aufweist, an welche sich mindestens ein vom Betätigungskörper (28) gebildeter Ausweichraum (31) anschließt, der alternativ zur Sperrfläche (32) durch Bewegung des Betätigungskörpers (28) jeweils entgegen Federrückstellkraft (46) mit dem Sperrkörper (23), diesem einen Lösehub gestattend, ausrichtbar ist, **dadurch gekennzeichnet, dass** die Führungshülse (15) mit mindestens einem Teil ihrer Axiallänge im Innenraum (16) des Außenrohres (11) aufgenommen ist, dass die die Wand der Führungshülse (15) durchsetzende Sperrkörper-Aussparung (18) eine Zunge (19) aufnimmt, deren inneres Zungenende (21) an einem Ende der Sperrkörper-Aussparung (18) an der Führungshülse (15) gehalten ist, dass das freie Zungenende (20) an seiner dem Innenrohr (12) zugewandten Seite den Sperrkörper (23) bildet, und dass Sperrfläche (32) und Ausweichraum (31) des Betätigungskörpers (28) alternativ mit der dem Innenrohr (12) abgewandten Seite des freien Zungenendes (20) ausrichtbar sind.

2. Teleskopierbares Staubsauger-Saugrohr nach Anspruch 1, **dadurch gekennzeichnet, dass** die Zunge (19) über ihr inneres Zungenende (21) stoffschlüssig mit der Führungshülse (15) verbunden ist.

3. Teleskopierbares Staubsauger-Saugrohr nach Anspruch 2, **dadurch gekennzeichnet, dass** Führungshülse (15) und Zunge (19) ein einheitliches Kunststoffspritzgußteil bilden.

4. Teleskopierbares Staubsauger-Saugrohr nach einem der Ansprüche 1 bis 3, **dadurch gekennzeichnet, dass** die Führungshülse (15) im wesentlichen gänzlich im Innenraum (16) des Aus-senrohres (11) aufgenommen ist, und dass das Außenrohr (11) eine dessen Wand durchsetzende Durchgriffsaussparung (17) aufweist, welche einerseits mit der Sperrkörper-Aussparung (18) der Führungshülse (15) und andererseits mit der Sperrfläche (32) und dem Ausweichraum (31) des Betätigungskörpers (28) ausgerichtet ist.

5. Teleskopierbares Staubsauger-Saugrohr nach einem der Ansprüche 1 bis 4, **dadurch gekennzeichnet, dass** die Außenmantelfläche (45) des Innenrohres (11) entlang einer Mantellinie eine als Nut ausgebildete axiale Führungssicke aufweist, in welche eine axiale Führungsfeder (42) der Führungshülse (15) eingreift.

6. Teleskopierbares Staubsauger-Saugrohr nach einem der Ansprüche 1 bis 5, **dadurch gekennzeichnet, dass** der Betätigungskörper eine Betätigungshülse (28) ist.

7. Teleskopierbares Staubsauger-Saugrohr nach Anspruch 6, **dadurch gekennzeichnet, dass** sich die Zunge (19) mit ihrer Zungenlängsachse (Z) axial zu den Teleskoprohren (11, 12) erstreckt und dass die Betätigungshülse (28) bezüglich der Zunge (19) axial verschieblich angeordnet ist.

8. Teleskopierbares Staubsauger-Saugrohr nach Anspruch 6 oder nach Anspruch 7, **dadurch gekennzeichnet, dass** die Außenmantelfläche (44) des Außenrohres (11) zur Axialführung der Betätigungshülse (28) eine eine Axialnut bildende Axialsicke (38) aufweist, in welche eine Axialfeder (41) der Betätigungshülse (28) eingreift, wobei dieselbe Axialsicke (38) an der Innenmantelfläche (37) des Außenrohres (11) eine Axialfeder (39) bildet, welche in eine Axialnut (40) an der Außenmantelfläche (33) der Führungshülse (15) eingreift.

9. Teleskopierbares Staubsauger-Saugrohr nach einem der Ansprüche 5 bis 8, **dadurch gekennzeichnet, dass** die axiale Führungssicke des Innenrohres (12) sowie die axiale Führungsfeder (42) der Führungshülse (15) einerseits und die Axialnut (40) an der Außenmantelfläche (33) der Führungshülse (15), die Axialsicke (38) des Außenrohres (11) sowie die Axialfeder (41) der Betätigungshülse (28) andererseits, miteinander koinzidierend, jeweils auf demselben Radius angeordnet sind.

10. Teleskopierbares Staubsauger-Saugrohr nach einem der Ansprüche 4 bis 9, **dadurch gekennzeichnet, dass** die im Innenraum (16) des Außenrohres (11) aufgenommene Führungshülse (15) zu ihrer Einschubbegrenzung einen die Stirnfläche (14) des Außenrohres (11) übergreifenden, radial nach außen weisenden Flansch (24) aufweist.

11. Teleskopierbares Staubsauger-Saugrohr nach Anspruch 10, **dadurch gekennzeichnet, dass** der Flansch (24) an der vom Außenrohr (11) weg weisenden Stirnfläche der Führungshülse (15) angeordnet ist.

12. Teleskopierbares Staubsauger-Saugrohr nach einem der Ansprüche 6 bis 11, **dadurch gekennzeichnet, dass** die das Aussenrohr (11) umgreifende Betätigungshülse (15) an ihrer Innenmantelfläche (30) eine Rast (34) bildet, welche mit einer an der Außenmantelfläche (44) des Außenrohres (11) angeordneten Gegenrast (26) unter Belassung einer begrenzten Axialverschieblichkeit der Betätigungshülse (28) relativ zum Außenrohr (11) schnappverrastend zusammenwirkt.

13. Teleskopierbares Staubsauger-Saugrohr nach Anspruch 12, **dadurch gekennzeichnet, dass** an dem der benachbarten Stirnfläche (14) des Außenrohres (11) zugewandten Ende der Durchgriffsaussparung (17) des Außenrohres (11) als Gegenrast eine mit ihrem freien Zungenende von der benachbarten Stirnfläche (14) des Außenrohres (11) wegweisende, radial nach aussen gebogene, Sperrzunge (26) angeordnet ist, welche mit einem an der Innenmantelfläche (30) der Betätigungshülse (28) vorragenden, die Rast bildenden, Sperrnocken (34) schnappverrastend zusammenwirkt.

14. Teleskopierbares Staubsauger-Saugrohr nach Anspruch 13, **dadurch gekennzeichnet, dass** die Führungshülse (15) an ihrer Außenmantelfläche (33) mindestens eine Rast (47) bildet, welche mit einer vom Außenrohr (11) gebildeten Gegenrast (35) schnappverrastend zusammenwirkt.

15. Teleskopierbares Staubsauger-Saugrohr nach Anspruch 14, **dadurch gekennzeichnet, dass** an dem der benachbarten Stirnfläche (14) des Außenrohres (11) zugewandten Ende der Durchgriffsaussparung (17) des Außenrohres (11) als Gegenrast mindestens ein Sperranschlag (35) vorgesehen ist, welcher mit mindestens einem außen auf dem inneren Zungenende (21) vorgesehenen die Rast bildenden, Sperrnocken (47) schnappverrastend zusammenwirkt.

16. Teleskopierbares Staubsauger-Saugrohr nach einem der Ansprüche 6 bis 15, **dadurch gekennzeichnet, dass** die Betätigungshülse (28) an ihrer der benachbarten Stirnfläche (14) des Außenrohres (11) abgewandten Stirnseite einen radial nach innen gerichteten Flansch (48) aufweist.

17. Teleskopierbares Staubsauger-Saugrohr nach Anspruch 16, **dadurch gekennzeichnet, dass** zwischen der radialen Innenfläche (49) des Innenflansches (48) der Betätigungshülse (28) und der radialen Außenfläche (50) des Außenflansches (24) der Führungshülse (15) ein Aufnahmeraum (R) für mindestens ein Druckfederelement (46) gebildet ist.

18. Teleskopierbares Staubsauger-Saugrohr nach Anspruch 17, **dadurch gekennzeichnet, dass** ein Druckfederelement von einer Schraubendruckfeder (46) gebildet ist, deren Außendurchmesser etwa dem Außendurchmesser des Außenflansches (24) der Führungshülse (15) entspricht.

19. Teleskopierbares Staubsauger-Saugrohr nach einem der Ansprüche 1 bis 18, **dadurch gekennzeichnet, dass** das innere Zungenende (21) an einem Ende der Sperrkörper-Aussparung (18) gelenkig an der Führungshülse (15) gehalten ist.

20. Teleskopierbares Staubsauger-Saugrohr nach einem der Ansprüche 1 bis 18, **dadurch gekennzeichnet, dass** das innere Zungenende (21) an einem Ende der Sperrkörper-Aussparung (18) nach Art einer einseitig eingespannten Biegefeder an der Führungshülse (15) gehalten ist.

21. Teleskopierbares Staubsauger-Saugrohr nach einem der Ansprüche 1 bis 20, **dadurch gekennzeichnet, dass** der Betätigungskörper (28) in zwei unterschiedlichen Richtungen (a, b) gegen jeweils eine entgegen einer Richtung (a, b) wirkende Federrückstellkraft bewegbar, insbesondere verschiebbar, ist, wobei die Sperrfläche (32) des Betätigungskörpers (28) in neutraler Federlage mit der dem Innenrohr (12) abgewandten Seite des freien Zungenendes (20) ausgerichtet ist, und wobei sich der Ausweichraum (31) des Betätigungskörpers (28) in den unterschiedlichen Richtungen (a, b) an beiden Seiten der Sperrfläche (32) erstreckt.

22. Teleskopierbares Staubsauger-Saugrohr nach Anspruch 21, **dadurch gekennzeichnet, dass** die beiden Federrückstellkräfte in den entgegengesetzten Axialrichtungen (a, b) im wesentlichen parallel zur Längsmittelachse (M) des teleskopierbaren Staubsauger-Saugrohres (10) wirken.

23. Teleskopierbares Staubsauger-Saugrohr nach Anspruch 22, **dadurch gekennzeichnet, dass** die in entgegengesetzten Axialrichtungen (a, b) wirkenden Federrückstellkräfte von einer sich quer zu den beiden Axialrichtungen (a, b) erstreckenden, an der Führungshülse (15) gehaltenen Stabfeder (51) bereitgestellt werden, deren Biegebereich (54) mit dem Betätigungskörper (28) bewegungsgekuppelt ist.

24. Teleskopierbares Staubsauger-Saugrohr nach Anspruch 23, **dadurch gekennzeichnet, dass** die Stabfeder (51) von einer mit der Führungshülse (15) koaxialen, letztere teilweise umschlingenden teilkreisförmigen Feder gebildet ist, deren beiden freien Federenden (52) an der Außenmantelfläche der Führungshülse (15) in Widerlagern (53) festgelegt sind.

## Claims

1. A telescopable vacuum-cleaner suction pipe (10), comprising an outer pipe (11) and an inner pipe (12) which is axially displaceable with respect to the outer pipe and has locking detents (13) along a surface line and is surrounded by a guide sleeve (15) fixed to the outer pipe (11), which guide sleeve has a locking-body aperture (18) to receive a locking body (23) cooperating with the locking detents (13), over which locking body is located an actuating body (28) which is retained at least indirectly in a relatively movable manner on the guide sleeve (15) or on the outer pipe (11) and which has a locking face (32) which covers the locking body (23), holding same in a locking recess (13), and is adjoined by at least one escape chamber (31) formed in the actuating body (28), which escape chamber is alignable, alternatively to the locking face (32), with the locking body (23), allowing the latter to perform a releasing movement, by movement of the actuating body (28) against a restoring spring force (46) in each case, **characterised in that** at least a part of the axial length of the guide sleeve (15) is accommodated in the interior (16) of the outer pipe (11), **in that** the locking-body aperture (18) passing through the wall of the guide sleeve (15) receives a tongue (19) the inner end (21) of which is attached to the guide sleeve (15) at one end of the locking-body aperture (18), **in that** the free end (20) of the tongue forms the locking body (23) on its side facing towards the inner pipe (12), and **in that** the locking face (32) and the escape chamber (31) of the actuating body (28) are alternatively alignable with the side of the free end (20) of the tongue facing away from the inner pipe (12).

2. Telescopable vacuum-cleaner suction pipe according to Claim 1, **characterised in that** the tongue (19) is integrally connected to the guide sleeve (15) by its inner end (21).

3. Telescopable vacuum-cleaner suction pipe according to Claim 2, **characterised in that** the guide sleeve (15) and the tongue (19) form a unitary injection-moulded part of plastics material.

4. Telescopable vacuum-cleaner suction pipe according to any one of claims 1 to 3, **characterised in that** the guide sleeve (15) is accommodated substantially wholly in the interior (16) of the outer pipe (11), and **in that** the outer pipe (11) has passing through its wall a through-aperture (17) which is aligned on one side with the locking-body aperture (18) of the guide sleeve (15) and on the other side with the locking face (32) and the escape chamber (31) of the actuating body (28).

5. Telescopable vacuum-cleaner suction pipe according to any one of claims 1 to 4, **characterised in that** the outer cylindrical surface (45) of the inner pipe (11) has along a surface line an axial guide ridge configured as a groove in which an axial guide tongue (42) of the guide sleeve (15) engages.

6. Telescopable vacuum-cleaner suction pipe according to any one of claims 1 to 5, **characterised in that** the actuating body is an actuating sleeve (28).

7. Telescopable vacuum-cleaner suction pipe according to Claim 6, **characterised in that** the tongue (19) extends with its longitudinal axis (Z) axially with respect to the telescoping tubes (11, 12) and **in that** the actuating sleeve (28) is arranged to be axially displaceable with respect to the tongue (19).

8. Telescopable vacuum-cleaner suction pipe according to Claim 6 or Claim 7, **characterised in that** the outer cylindrical surface (44) of the outer pipe (11) has an axial ridge (38) incorporating an axial groove for axial guidance of the actuating sleeve (28), in which groove an axial tongue (41) of the actuating sleeve (28) engages, said axial ridge (38) forming an axial tongue (39) on the inner cylindrical surface (37) of the outer pipe (11), which tongue (39) engages in an axial groove (40) in the outer cylindrical surface (33) of the guide sleeve (15).

9. Telescopable vacuum-cleaner suction pipe according to any one of claims 5 to 9, **characterised in that** the axial guide ridge of the inner pipe (12) and the axial guide tongue (42) of the guide sleeve (15) on one side, and the axial groove (40) on the outer cylindrical surface (33) of the guide sleeve (15), the axial ridge (38) of the outer pipe (11) and the axial tongue (41) of the actuating sleeve (28) on the other, are in each case arranged on the same radius coincidingly with one another.

10. Telescopable vacuum-cleaner suction pipe according to any one of claims 4 to 9, **characterised in that** the guide sleeve (15) accommodated in the interior (16) of the outer pipe (11) has a flange (24) projecting radially outwardly and overlapping the end face (14) of the outer pipe (11).

11. Telescopable vacuum-cleaner suction pipe according to Claim 10, **characterised in that** the flange (24) is arranged on the end face of the guide sleeve (15) facing away from the outer pipe (11).

12. Telescopable vacuum-cleaner suction pipe according to any one of claims 6 to 11, **characterised in that** the actuating sleeve (15) surrounding the outer pipe (11) has on its inner cylindrical surface (30) a catch (34) which co-operates in a snap-locking manner with an opposed catch (26) arranged on the outer cylindrical surface (44) of the outer pipe (11) while preserving a limited axial displaceability of the actuating sleeve (28) relative to the outer pipe (11).

13. Telescopable vacuum-cleaner suction pipe according to Claim 12, **characterised in that** a locking tongue (26) facing with its free end away from the adjacent end face (14) of the outer pipe (11) and bent radially outwardly is arranged as an opposed catch at the end of the through-aperture (17) of the outer pipe (11) facing towards the adjacent end face (14) of the outer pipe (11), which locking tongue co-operates in a snap-locking manner with a locking element (34) projecting from the inner cylindrical surface (30) of the actuating sleeve (28) and forming the catch.

14. Telescopable vacuum-cleaner suction pipe according to Claim 13, **characterised in that** the guide sleeve (15) has on its outer cylindrical surface (33) at least one catch (47) which co-operates in a snap-locking manner with an opposed catch (35) formed on the outer pipe (11).

15. Telescopable vacuum-cleaner suction pipe according to Claim 14, **characterised in that** at least one locking stop (35) is provided as an opposed catch at the end of the through aperture (17) of the outer pipe (11) facing towards the adjacent end face (14) of the outer pipe (11), which locking stop co-operates in a snap-locking manner with a locking element (47) provided externally on the inner end (21) of the tongue and forming the catch.

16. Telescopable vacuum-cleaner suction pipe according to any one of claims 6 to 15, **characterised in that** the actuating sleeve (28) has on its end face facing away from the adjacent end face (14) of the outer pipe (11) a radially inwardly directed flange (48).

17. Telescopable vacuum-cleaner suction pipe according to Claim 16, **characterised in that** a space (R) to accommodate at least one compression spring element (46) is formed between the radial inner face (49) of the internal flange (48) of the actuating sleeve (28) and the radial outer face (50) of the external flange (24) of the guide sleeve (15).

18. Telescopable vacuum-cleaner suction pipe according to Claim 17, **characterised in that** a compression spring element is formed by a helical compression spring (46) the external diameter of which corresponds approximately to the external diameter of the external flange (24) of the guide sleeve (15).

19. Telescopable vacuum-cleaner suction pipe according to any one of claims 1 to 18, **characterised in that** the inner end (21) of the tongue is attached flexibly to the guide sleeve (15) at one end of the locking-body aperture (18).

20. Telescopable vacuum-cleaner suction pipe according to any one of claims 1 to 18, **characterised in that** the inner end (21) of the tongue is attached to the guide sleeve (15) at one end of the locking-body aperture (18) in the manner of a bending spring loaded towards one side.

21. Telescopable vacuum-cleaner suction pipe according to any one of claims 1 to 20, **characterised in that** the actuating body (28) is movable, in particular by pushing, in two different directions (a, b) against a restoring spring force acting against one direction (a, b) in each case, the locking face (32) of the actuating body (28) being aligned in the neutral spring position with the side of the free end (20) of the tongue facing away from the inner pipe (12), and the escape chamber (31) of the actuating body (28) extending on both sides of the locking face (32) in the different directions (a, b).

22. Telescopable vacuum-cleaner suction pipe according to Claim 21, **characterised in that** the two restoring spring forces act in the opposed axial directions (a, b) substantially parallel to the longitudinal centre axis (M) of the telescopable vacuum-cleaner suction pipe (10).

23. Telescopable vacuum-cleaner suction pipe according to Claim 22, **characterised in that** the restoring spring forces acting in opposed axial directions (a, b) are contributed by a bar spring (51) retained on the guide sleeve (15) and extending transversely to the two axial directions (a, b), the bending portion (54) of which bar spring is coupled with respect to movement to the actuating body (28).

24. Telescopable vacuum-cleaner suction pipe according to Claim 23, **characterised in that** the bar spring (51) is formed by a partly-circular spring coaxial with and partially surrounding the guide sleeve (15), the two free ends (52) of which bar spring are located in retaining elements (53) on the outer cylindrical surface of the guide sleeve (15).

## Revendications

1. Tube d'aspirateur (10) télescopique, avec un tube extérieur (11) et un tube intérieur (12) mobile axialement par rapport à ce dernier, présentant des cavités d'encliquetage (13) le long d'une ligne d'enveloppe, tube intérieur entouré par une douille de guidage (15) fixée sur le tube extérieur (11), le douille de guidage (15) formant un évidement de corps de blocage (18) devant recevoir un corps de blocage (23) coopérant avec les cavités d'encliquetage (13), le corps de blocage se voyant superposer un corps d'actionnement (28), maintenu avec une mobilité relative, au moins indirectement, sur la douille de guidage (15) ou sur le tube extérieur (11), le corps d'actionnement présentant une face de blocage (32), entourant le corps de blocage (23) et maintenant celui-ci dans un évidement d'encliquetage (13), à la surface de blocage (32) se raccordant au moins un espace d'échappement (31), formé par le corps d'actionnement (28) et pouvant en alternance être aligné avec le corps de blocage (23), par rapport à la surface de blocage (32), par un déplacement du corps d'actionnement (28), chaque fois à l'encontre d'une force de rappel élastique (46), en permettant au corps de blocage (23) d'effectuer une course de désolidarisation, **caractérisé en ce que** la douille de guidage (15) est logée, par au moins une partie de sa longueur axiale, dans l'espace intérieur (16) du tube extérieur (11), **en ce que** l'évidement de corps de blocage (18), traversant la paroi de la douille de blocage (15), reçoit une languette (19), dont l'extrémité de languette (21) intérieure est maintenue sur une extrémité de l'évidement de corps de blocage (18) sur la douille de guidage (15), **en ce que**, sur sa face, tournée vers le tube intérieur (12), l'extrémité de languette (20) libre forme le corps de blocage (23), et **en ce que** la face de blocage (32) et l'espace d'échappement (31) du corps d'actionnement (28) peuvent être alignés en alternance avec la face, opposée au tube intérieur (12), de l'extrémité de languette (20) libre.

2. Tube d'aspirateur télescopique selon la revendication 1, **caractérisé en ce que** la languette (19) est reliée, par une liaison par la matière, à la douille de guidage (15), par l'intermédiaire de son extrémité de languette (21) intérieure.

3. Tube d'aspirateur télescopique selon la revendication 2, **caractérisé en ce que** la douille de guidage (15) et la languette (19) forment une pièce moulée par injection en matière plastique, unitaire.

4. Tube d'aspirateur télescopique selon l'une des revendications 1 à 3, **caractérisé en ce que** la douille de guidage (15) est logée pratiquement totalement dans l'espace intérieur (16) du tube extérieur (11), et **en ce que** le tube extérieur (11) présente un évidement de passage (17), traversant sa paroi et qui est aligné, d'une part, avec l'évidement de corps de blocage (18) de la douille de guidage (15) et, d'autre part, avec la face de blocage (32) et l'espace d'échappement (31) du corps d'actionnement (28).

5. Tube d'aspirateur télescopique selon l'une des revendications 1 à 4, **caractérisé en ce que** la surface d'enveloppe extérieure (45) du tube intérieur (11) présente, le long d'une ligne d'enveloppe ,une moulure de guidage axial réalisée sous la forme de rainure, dans laquelle s'engage une languette de guidage (42) axiale de la douille de guidage (15).

6. Tube d'aspirateur télescopique selon l'une des revendications 1 à 5, **caractérisé en ce que** le corps d'actionnement est une douille d'actionnement (28).

7. Tube d'aspirateur télescopique selon la revendication 6, **caractérisé en ce que** la languette (19) s'étend avec son axe longitudinal de languette (Z) axialement par rapport aux tubes télescopiques (11, 12), et **en ce que** la douille de guidage (28) est disposée de façon mobile axialement par rapport à la languette (19).

8. Tube d'aspirateur télescopique selon la revendication 6 ou la revendication 7, **caractérisé en ce que** la surface d'enveloppe extérieure (44) du tube extérieur (11) présente, pour assurer le guidage axial de la douille d'actionnement (28), une moulure axiale (38), formant une rainure axiale et dans laquelle s'engage une languette axiale (41) de la douille d'actionnement (28), la même moulure axiale (38) formant, sur la face d'enveloppe intérieure (37) du tube extérieur (11), une languette axiale (39), s'engageant dans une rainure axiale (40) ménagée sur la face d'enveloppe extérieure (33) de la douille de guidage (15).

9. Tube d'aspirateur télescopique selon l'une des revendications 5 à 8, **caractérisé en ce que** la moulure de guidage axiale du tube intérieur (12), ainsi que la languette de guidage (42) axiale de la douille de guidage (15), d'une part, et la rainure axiale (40) sur la face d'enveloppe extérieure (33) de la douille de guidage (15), la moulure axiale (38) du tube extérieur (11) ainsi que la languette axiale (41) de la douille d'actionnement (28), d'autre part, sont disposées chaque fois sur le même rayon, de façon à coïncider les unes les autres.

10. Tube d'aspirateur télescopique selon l'une des revendications 4 à 9, **caractérisé en ce que** la douille de guidage (15) logée dans l'espace intérieur (16) du tube extérieur (11) présente, pour sa limitation de course d'enfoncement, une bride (24) tournée radialement vers l'extérieur, entourant la face frontale (14) du tube extérieur (11).

11. Tube d'aspirateur télescopique selon la revendication 10, **caractérisé en ce que** la bride (24) est disposée sur la face frontale, s'écartant du tube extérieur (11), de la douille de guidage (15).

12. Tube d'aspirateur télescopique selon l'une des revendications 6 à 11, **caractérisé en ce que** la douille d'actionnement (15) entourant le tube extérieur (11) forme, sur sa face d'enveloppe intérieure (30), un cliquet (34), coopérant, avec effet d'encliquetage, avec un contre-cliquet (26) disposé sur la face d'enveloppe extérieure (44) du tube extérieur (11), en laissant subsister une mobilité axiale limitée de la douille d'actionnement (28) par rapport au tube extérieur (11).

13. Tube d'aspirateur télescopique selon la revendication 12, **caractérisé en ce que** sur l'extrémité, tournée vers la face frontale (14) voisine du tube extérieur (11) de l'évidement de passage (17) du tube extérieur (11), est disposée en tant que contre-cliquet une languette de blocage (26), coudée radialement vers l'extérieur, s'écartant, par son extrémité de languette libre, vis-à-vis de la face frontale (14) voisine du tube extérieur (11), languette de blocage qui coopère, avec effet d'encliquetage, avec un ergot de blocage (34), faisant saillie sur la face d'enveloppe intérieure (30) de la douille d'actionnement (28) et formant le cliquet.

14. Tube d'aspirateur télescopique selon la revendication 13, **caractérisé en ce que** la douille de guidage (15) forme, sur sa face d'enveloppe extérieure (33), au moins un cliquet (47), coopérant avec effet d'encliquetage avec un contre-cliquet (35) formé par le tube extérieur (11).

15. Tube d'aspirateur télescopique selon la revendication 14, **caractérisé en ce que**, sur l'extrémité, tournée vers la face frontale (14) voisine du tube extérieur (11), de l'évidement de passage (17) du tube extérieur (11) est prévue, en tant que contre-cliquet, au moins une butée de blocage (35), qui coopère avec encliquetage avec au moins un cliquet de blocage formant le cliquet (47), prévu extérieurement sur l'extrémité de languette (21) intérieure.

16. Tube d'aspirateur télescopique selon l'une des revendications 6 à 15, **caractérisé en ce que** la douille d'actionnement (28) présente, sur sa face frontale, opposée à la face frontale (14) voisine du tube extérieur (11), une bride (48) tournée radialement vers l'intérieur.

17. Tube d'aspirateur télescopique selon la revendication 16, **caractérisé en ce que**, entre la face intérieure (49) radiale de la bride intérieure (48) de la douille d'actionnement (28) et la face extérieure radiale (50) de la bride extérieure (24) de la douille de guidage (15), est formé un espace de logement (R) pour au moins un élément de ressort de compression (46).

18. Tube d'aspirateur télescopique selon la revendication 17, **caractérisé en ce qu'**un élément de ressort de compression est formé par un ressort de compression hélicoïdal (46), dont le diamètre extérieur correspond à peu près au diamètre extérieur de la bride extérieure (24) de la douille de guidage (15).

19. Tube d'aspirateur télescopique selon l'une des revendications 1 à 18, **caractérisé en ce que** l'extrémité de languette intérieure (21) est maintenue de façon articulée, à une extrémité de l'évidement de corps de blocage (18), sur la douille de guidage (15).

20. Tube d'aspirateur télescopique selon l'une des revendications 1 à 18, **caractérisé en ce que** l'extrémité de languette (21) intérieure est maintenue sur la douille de guidage (15), sur une extrémité de l'évidement de corps de blocage (18), à la façon d'un ressort de flexion, enserré sur un côté.

21. Tube d'aspirateur télescopique selon l'une des revendications 1 à 20, **caractérisé en ce que** le corps d'actionnement (28) est déplaçable dans deux directions (a, b) différentes, chaque fois à l'encontre d'une force de rappel élastique agissant à l'encontre d'une direction (a, b), le corps d'actionnement étant en particulier susceptible de coulisser, sachant que, lorsque l'on est à la position élastique neutre, la face de blocage (32) du corps d'actionnement (28) est alignée avec la face, opposée au tube intérieur (12), de l'extrémité de languette (20) libre, et l'espace d'échappement (31) du corps d'actionnement (28) s'étendant, dans les différentes directions (a, b), sur les deux côtés de la face de blocage (32).

22. Tube d'aspirateur télescopique selon la revendication 21, **caractérisé en ce que** les deux forces de rappel élastique agissent dans des directions axiales (a, b) opposées sensiblement parallèlement à l'axe médian longitudinal (M) du tube d'aspirateur télescopique (10).

23. Tube d'aspirateur télescopique selon la revendication 22, **caractérisé en ce que** les efforts de rappel élastique, agissant à l'encontre des directions axiales (a, b), sont produits par un ressort en forme de barre (51) maintenu sur la douille de guidage (15), s'étendant transversalement par rapport aux deux directions axiales (a, b), ressort en forme de barre dont la zone de flexion (54) est couplée cinématiquement au corps d'actionnement (28).

24. Tube d'aspirateur télescopique selon la revendication 23, **caractérisé en ce que** le ressort en forme de barre (51) est formé par un ressort en forme de cercle partiel, coaxial à la douille de guidage (15), enlaçant partiellement celle-ci, ressort dont les deux extrémités de ressort (52) libres sont fixées dans des contre-appuis (53), sur la surface d'enveloppe extérieure de la douille de guidage (15).
